Europäisches Patentamt

European Patent Office

Office européen des brevets

(19)

(11) Publication number: **0 232 974 B1**

# EUROPEAN PATENT SPECIFICATION

(12)

(45) Date of publication of patent specification: **17.07.91**   (51) Int. Cl.⁵: **B60R 25/04**

(21) Application number: **87300221.6**

(22) Date of filing: **12.01.87**

(54) **A fuel cut-off anti-theft device.**

(30) Priority: **10.01.86 IE 71/86**

(43) Date of publication of application:
**19.08.87 Bulletin 87/34**

(45) Publication of the grant of the patent:
**17.07.91 Bulletin 91/29**

(84) Designated Contracting States:
**AT BE CH DE ES FR GB GR IT LI LU NL SE**

(56) References cited:
**FR-A- 2 550 499**
**FR-A- 2 562 012**
**US-A- 3 670 836**
**US-A- 3 756 341**

(73) Proprietor: **Sheeran, Patrick**
**21, Bellevue Park Avenue**
**Dublin 4(IE)**

(72) Inventor: **Gosker, Brendan Gerard**
**37A Binn Eadair View**
**Sutton County Dublin(IE)**

(74) Representative: **Pearce, Anthony Richmond et al**
**MARKS & CLERK Alpha Tower Suffolk Street**
**Queensway Birmingham B1 1TT(GB)**

## Description

The invention relates to a fuel cut-off anti-theft device for a vehicle of the type comprising a fuel control valve, the valve having operating means for moving the valve between an open and a closed position, and control means for the operating means.

Fuel cut-off anti-theft devices of this type are known. In conventional arrangements the control means and/or valve can be relatively easily tampered with allowing a thief to open the valve to allow flow of fuel.

There is therefore a need for an improvement anti-theft device of this type.

The invention is directed towards providing such an improved device which will be difficult for a thief to tamper with.

FR-A2562012 discloses a vehicle anti-theft device comprising (a) a valve unit including a fuel control valve and some control means, (b) a keypad and (c) a dashboard-mounted security and relay centre which is located remotely from the valve unit and electrically connected therewith via an a.c. line.

US-A-3756341 and US-A-3670836 disclose complex vehicle anti-theft devices wherein a fuel control valve is located remotely from control circuitry therefor. The control circuitry includes a decoding box so that an uncoded signal is passed down a cable which leads to the valve and which is said to be tamper-proof.

According to the invention there is provided a fuel cutoff anti-theft device comprising:
a fuel control valve;
operating means for moving the valve between an open and a closed position; and
control means for controlling the operation of the operating means;
the control means comprising;
a remote command input means
a valve control device, and
a cable interconnecting the input means and the valve control device,
characterised in that:-
the remote input means outputs a coded digital signal to the valve control device along the cable,
the valve control device includes means for decoding the coded signal from the remote input means and operating circuitry for the valve,
the local valve control device is mounted to the valve, and
tamper-proof means comprising an encapsulating or potting compound enclosing the local valve control devices and at least a portion of the fuel control valve body are provided to prevent tampering with the valve and the local valve control device.

Mounting the control device to the control valve makes it difficult to tamper with either the valve or the control device as one acts to shield the other.

The use of an encapsulating or potting compound, such as an epoxy resin, makes it almost impossible for a thief to interfere with the circuit. Ideally, the compound is brittle on setting so that it will be very difficult to break in such a way as to allow the circuit to be interfered with.

In a preferred embodiment of the invention the input means comprises a remote keypad. Such an input means is easy to operate and allows a coded input to be used.

The keypad may be connected to the control device by a cable along which an input signal from the keypad is delivered to operate the valve.

In a particularly preferred embodiment of the invention the control device closes the valve if a power supply source to the control device is cut off. The advantage of this feature is in ensuring the valve is in the closed position if the power supply is cut.

Preferably, a preset number and sequence of input keys are pressed to open the valve.

The electronic circuit may comprise an integrated circuit sequence detector which is powered through a voltage regulator in association with a time delay capacitor and a relay for the valve.

The invention will be more clearly understood from the following description of an embodiment thereof given by way of example only with reference to the accompanying drawings in which:
Fig. 1 is a perspective view of portion of an anti-theft device according to the invention,
Fig. 2 is a front, partially cross-sectional view of the device,
Fig. 3 is a perspective view of the anti-theft device, in use, and
Fig. 4 is a schematic circuit diagram of portion of the device.

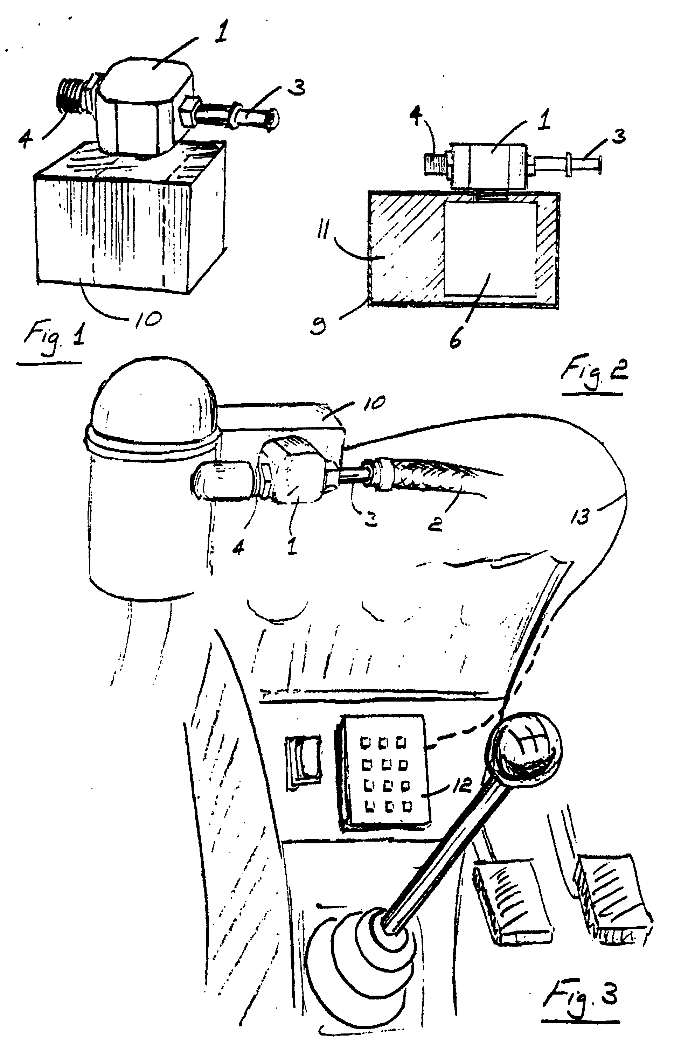

Referring to the drawings, there is illustrated a fuel cut-off anti-theft device for a vehicle comprising a fuel control valve 1 for mounting in a vehicle fuel line 2. In this case, the valve includes an inlet spigot 3 to which the fuel line 2 is attached and an outlet spigot 4 which is screwed to the carburettor 5 of the vehicle. The valve 1 is of conventional construction and includes operating means housed within the valve body 6 for moving the valve between an open position in which fuel from the fuel line 2 is allowed to pass into the carburettor 5 to a closed position in which the flow of fuel from the fuel line to the carburettor is shut off. Control means for the operating means comprises a local control device 10 which is mounted adjacent the valve 1 and in this case is attached to it, the valve body 6 shielding the local control device 10 and vice versa against tampering. The control means also comprises a remote control signal input means, in this case, a keypad 12 which is usually mounted within the vehicle, for example, on the dashboard as illustrated in Fig. 2 and is connected to the control device 10 by a multi-core cable 13.

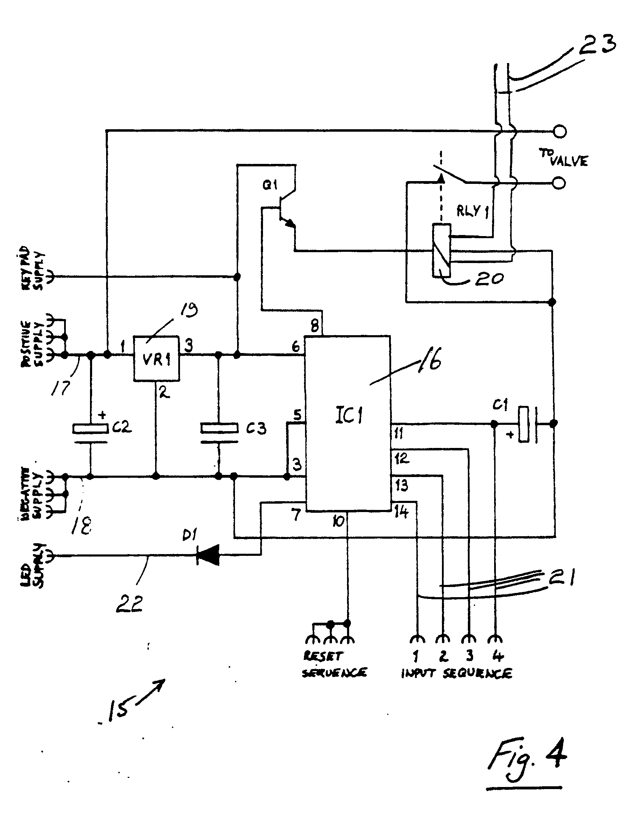

The local control device 10 includes an electronic circuit 15 which is illustrated schematically in Fig. 4.

The circuit 15 comprises an integrated circuit sequence detector 16 powered by an input 12V DC supply through positive and negative inputs 17,18 respectively through a 12 volt voltage regulator 19 and associated noise filtering capacitors C2 (.33μF) and C3 (47μF). The valve is operated by a relay 20 which is activated from the sequence detector 16 through a transistor Q1. Input signals from the keypad are fed to the sequence detector 16 along input lines 21. A time delay capacitor C1 (2.2μF) provides a preset time within which the user must input the correct code at the keypad to operate the valve. A diode D1 is provided on a keypad LED supply line 22 to prevent power being inputted to the sequence detector 16 on the LED supply line. The relay 20 may also be used to activate an ignition and circuit breaker along circuit breaker output lines 23.

The sequence detector 16 decodes the input signals and outputs a trigger output signal to the relay 20 in accordance with the instructions pre-programmed into the integrated circuit. The instruction to open and close the valve 1, preferably comprises a coded sequence of inputs which must be inputted through the keypad within a preset time limit. If the input sequence corresponds to the pre-programmed sequence on the integrated circuit 16, a trigger output signal is outputted to operate the relay 20 and open the valve 1. In the event that the input signal is not the same as the inputs pre-programmed at manufacturing stage into the integrated circuit, no output is delivered on the trigger output line and the valve 1 will remain closed.

To prevent tampering, the electronic circuit 15, and in this case also the valve body are mounted in a potting box 9 and encapsulated with a flame retardant epoxy resin compound to form an encapsulated mass 11 which becomes brittle on setting. Thus, it would be extremely difficult if not impossible for a thief to tamper with the circuit. In addition to protecting the electronic circuit 15, the encapsulation of the circuit and valve body also protects the valve operating means against tampering.

The invention provides an anti-theft device which is extremely difficult if not impossible, to tamper with. Only theinput keypad is positioned in the car and the valve cannot be opened by the keypad without using the correct input sequence. In the event that the cable between the keypad and the electronic circuit is cut, the valve still remains closed. Any attempt to interfere with the electronic circuit by trying to break the resin will more than likely result in damage to the circuit and again the valve will remain closed.

It will be appreciated that while a particular type of fuel control valve has been illustrated and described, any suitable control valve may be employed. For example, although it is advantageous from the point of view of increasing the tamper-proof aspects of the anti-theft device to mount the control valve adjacent to the carburettor, it may be mounted in any other convenient location, for example, in the fuel line or preferably to make access even more difficult in the fuel tank. A further advantage of such an arrangement is in allowing the fuel to be cut off at source in the event of an accident to help prevent possible combustion; fire and/or explosion. Thus, impact detection means may be provided to operate the relay to close the valve in the event of an accident. The valve may also be formed integrally with the vehicle carburettor. In engines which do not include a carburettor the device may be mounted in any convenient location in the fuel line.

It will also be appreciated that the anti-theft device according to the invention may be linked to or associated with any other suitable anti-theft device and may, for example, provide an output signal to an audible or visual alarm, or may be linked with such a system.

It will further be appreciated that any coded signal may be used to operate the fuel control valve. Where the coded signal is inputted through a keypad the code is preferably at least a two digit code and most preferable at least four digit code to prevent accidental shut-off of the valve.

## Claims

1.  A fuel cut-off anti-theft device for a vehicle fuel supply comprising:

    a fuel control valve (1);

    operating means for moving the valve (1) between an open and a closed position; and

    control means (10, 12) for controlling the operation of the operating means;

    the control means (10, 12) comprising;

    a remote command input means (12),
    a valve control device (10), and
    a cable (13) interconnecting the input means (12) and the valve control device (10),

    characterised in that:-

the remote input means (12) outputs a coded digital signal to the valve control device (10) along the cable (13),

the valve control device (10) includes means for decoding the coded signal from the remote input means (12) and operating circuitry for the valve (1),

the local valve control device (10) is mounted to the valve (1), and

tamper-proof means (9, 11) comprising an encapsulating or potting compound (11) enclosing the local valve control device (10) and at least a portion of the fuel control valve body (1) are provided to prevent tampering with the valve (1) and the local valve control device (10).

2. An anti-theft device as claimed in claim 1, wherein the control device (10) closes the valve (1) if a power supply source to the control device (10) is cut off.

3. An anti-theft device as claimed in claim 1 or 2, wherein the input means (12) comprises a remote keypad (12).

4. An anti-theft device as claimed in claim 3 wherein a preset number and sequence of input keys are pressed to open the valve (1).

5. An anti-theft device as claimed in any preceding claim, wherein the control device comprises an electronic circuit (15) comprising an integrated circuit sequence detector (16) which is powered through a voltage regulator (19) in association with a time delay capacitor (C1) and a relay (20) for the valve (1).

6. An anti-theft device as claimed in any preceding claim, wherein the compound (11) is brittle on setting.

**Revendications**

1. Dispositif anti-vol à coupure de combustible pour le dispositif d'amenée de carburant d'un véhicule comprenant:

une valve de commande de combustible (1);

des moyens d'actionnement pour le déplacement de la valve (1) entre une position d'ouverture et une position de fermeture; et

des moyens de commande (10, 12) pour la commande du fonctionnement des moyens d'actionnement;

les moyens de commande (10, 12) comprenant:

des moyens d'entrée de signal de commande éloigné (12),
un dispositif de commande de la valve (10), et
un câble (13) reliant les moyens d'entrée (12) et le dispositif de commande de la valve (10),

caractérisé en ce que

les moyens d'entrée de signal éloigné (12) émettent un signal numérique codé vers le dispositif de commande de la valve (10) le long du câble (13),

le dispositif de commande de la valve (10) comprend des moyens de décodage du signal codé provenant des moyens d'entrée de signal éloigné (12) et d'actionnement du circuit pour la valve (1),

le dispositif local de commande de la valve (10) est monté à la valve (1) et

les moyens à l'abri des manipulations frauduleuses (9, 11) comprenant un composé d'empotage ou d'encapsulation (11) comprenant le dispositif local de commande de la valve (10) et au moins une portion du corps de la valve de commande du carburant (1) sont prévus pour empêcher l'exercice de manipulations frauduleuses avec la valve (1) et le dispositif local de commande de la valve (10).

2. Dispositif anti-vol selon la revendication 1, caractérisé en ce que le dispositif de commande (10) ferme la valve (1) s'il y a coupure d'une source d'alimentation du dispositif de commande (10).

3. Dispositif anti-vol selon la revendication 1 ou 2, caractérisé en ce que les moyens d'entrée (12) comprennent un clavier éloigné (12).

4. Dispositif anti-vol selon la revendication 3, caractérisé en ce qu'un nombre prédéterminé et une séquence déterminée de touches d'entrée sont à presser pour ouvrir la valve (1).

5. Dispositif anti-vol selon une des revendications précédentes, caractérisé en ce que le dispositif de commande comprend un circuit électronique (15) comprenant un détecteur de séquence à circuit imprimé (16) qui est alimenté par un régulateur de tension (19) en association avec une capacité retardatrice (C1) et un relais (20) pour la valve (1).

6. Dispositif anti-vol selon une des revendications précédentes, caractérisé en ce que le composé (11) est cassant après durcissement.

**Patentansprüche**

1. Treibstoffabschaltende Diebstahlsicherungseinrichtung für eine Kraftstoffzufuhr eines Kraftfahrzeuges, welche umfaßt:

ein Kraftstoff-Steuerventil (1);

eine Betätigungseinrichtung zur Bewegung des Ventils (1) zwischen einer offenen und einer geschlossenen Stellung; und

eine Steuereinrichtung (10, 12) zur Steuerung des Betriebs der Betätigungseinrichtung;

wobei die Steuereinrichtung (10, 12)
eine entfernt angeordnete Befehlseingabeeinrichtung (12),
eine Ventilsteuervorrichtung (10) und
ein Kabel (13) umfaßt, welches die Eingabeeinrichtung (12) mit der Ventilsteuervorrichtung (10) verbindet,

dadurch gekennzeichnet, daß

die entfernt angeordnete Eingabeeinrichtung (12) ein codiertes digitales Signal über das Kabel (13) an die Ventilsteuervorrichtung (10) abgibt,

die Ventilsteuervorrichtung (10) eine Einrichtung zur Decodierung des codierten Signals aus der entfernt angeordneten Eingabeeinrichtung (12) und eine Betätigungsschaltung für das Ventil (1) enthält,

die lokale Ventilsteuervorrichtung (10) am Ventil (1) montiert ist und

eine Eingriffssicherungseinrichtung (9, 11) vorgesehen ist, die eine Einkapsel- oder Verguß-Masse (11) umfaßt, welche die lokale Ventilsteuereinrichtung (10) und zumindest einen Teil des Kraftstoffsteuerventilkörpers (1) umgibt, um ein Herumbasteln mit dem Ventil (1) und der lokalen Ventilsteuereinrichtung (10) zu verhindern.

2. Diebstahlsicherungseinrichtung nach Anspruch 1, worin die Steuervorrichtung (10) das Ventil (1) schließt, wenn eine Stromversorgungsquelle für die Steuervorrichtung (10) abgetrennt wird.

3. Diebstahlsicherungseinrichtung nach Anspruch 1 oder 2, worin die Eingabeeinrichtung (12) eine entfernt angeordnete Tastatur (12) umfaßt.

4. Diebstahlsicherungseinrichtung nach Anspruch 3, worin eine vorbestimmte Zahl und Sequenz von Eingabetasten gedrückt werden, um das Ventil (1) zu öffnen.

5. Diebstahlsicherungseinrichtung nach einem der vorhergehenden Ansprüche, worin die Steuervorrichtung einen elektronischen Schaltkreis (15) umfaßt, der einen als integrierten Schaltkreis ausgebildeten Sequenzdetektor (16), der über einen Spannungsregler (19) in Verbindung mit einem Zeitverzögerungskompensator (C1) versorgt wird, und ein Relais (20) für das Ventil (1) umfaßt.

6. Diebstahlsicherungseinrichtung nach einem der vorhergehenden Ansprüche, worin die Masse (11) beim Aushärten spröde wird.

Fig. 1

Fig. 2

Fig. 3

Fig. 4